# EUROPÄISCHE PATENTSCHRIFT

(11) **EP 0 901 429 B1**
(45) Veröffentlichungstag und Bekanntmachung des Hinweises auf die Patenterteilung: **01.08.2001**
(21) Anmeldenummer: 97925902.5
(22) Anmeldetag: 30.05.1997
(51) Int. Cl.: B60R 1/06

(54) **VORRICHTUNG ZUM VERSTELLEN DER POSITION EINES AUSSENSPIEGELS**
DEVICE FOR ADJUSTING THE POSITION OF A SIDE MIRROR
DISPOSITIF DE REGLAGE DE LA POSITION D'UN RETROVISEUR

(30) Priorität: 05.06.1996 DE 19623885
(43) Veröffentlichungstag der Anmeldung: 17.03.1999
(73) Patentinhaber: Magna Reflex Holding GmbH, 97959 Assamstadt (DE)
(72) Erfinder: JURASCHEK, Peter, D-74385 Pleidelsheim (DE)
(74) Vertreter: Pfenning, Meinig & Partner
(86) Internationale Anmeldenummer: DE9701128
(87) Internationale Veröffentlichungsnummer: WO9746421

(56) Entgegenhaltungen:
- EP-A- 0 324 926
- EP-A- 0 340 944
- EP-A- 0 392 721
- DE-A- 3 923 922
- DE-A- 3 926 891
- DE-A- 3 926 892
- DE-C- 3 613 878
- DE-C- 4 004 686
- DE-C- 4 015 829
- DE-U- 8 913 032
- DE-U- 9 308 449
- FR-A- 2 632 585
- PATENT ABSTRACTS OF JAPAN vol. 10, no. 159 (M-486) [2215] , 7.Juni 1986 & JP 61 012451 A (ICHIKO), 20.Januar 1986,

## Beschreibung

Die Erfindung bezieht sich auf eine Vorrichtung zum Verstellen der Position eines Außenspiegels für Fahrzeuge aller Art nach dem Oberbegriff des Anspruchs 1.

Derartige Verstellvorrichtungen manuell, mechanisch oder auch elektrisch angetriebener Art werden insbesondere bei Kraftfahrzeugen verwendet, um die Außenspiegel zwischen verschiedenen Positionen zu bewegen. Insbesondere werden die Außenspiegel zwischen einer vorbestimmten, ausgeklappten Fahrposition und einer mit der Spiegelfläche an das Fahrzeug angelegten Parkposition durch derartige Vorrichtungen hin und her bewegt.

Sogenannte zweiachsige Außenspiegel besitzen gewöhnlich einen fest mit dem Fahrzeug verbundenen Spiegelfuß und einen an dem Spiegelfuß beweglich befestigten Spiegelkopf mit einem Spiegelrahmen, der beispielsweise das Spiegelflächenelement sowie dessen ebenfalls mechanisch oder elektrisch betätigten Verstellmechanismus zur Einstellung des auf die Fahrersitzposition bezogenen Blickwinkels trägt.

Die gattungsgemässe US 5 477 390 offenbart eine Verstellvorrichtung mit einem Spiegelfuß, einem Spiegelrahmen und einem Zahnradmechanismus, über den der Spiegelrahmen relativ zu dem Spiegelfuß bewegt wird. Der Zahnradmechanismus besteht aus einer zweiarmigen Haltestange, die an dem Spiegelfuß drehbar angelenkt ist und deren einer Arm als Zahnsegment ausgebildet ist, und aus einem elektrischen Antrieb, der fest mit dem Spiegelrahmen verbunden ist und ein mit dem Zahnsegment in Eingriff stehendes Zahnrad antreibt. Der Spiegelrahmen ist drehbar an dem Ende des zweiten Armes der Haltevorrichtung angelenkt. Wird nun der Elektromotor betätigt, so läuft das Zahnrad auf dem Zahnsegment ab und der Spiegelrahmen wird um die Achse der Anlenkung an der Haltestange gedreht.

Die in der US 5 477 390 offenbarte Verstellvorrichtung weist weiterhin eine Spiralfeder auf, die den Spiegelfuß und den Spiegelrahmen verbindet und die unter einer starken Vorspannung steht, so daß der Spiegelrahmen durch die Kraft der Fader um die Achse der drehbaren Anlenkung der Haltevorrichtung am Spiegelfuß gedreht wird, bis mit dem Spiegelrahmen fest verbundene Nasen in an dem Spiegelfuß entsprechend angeordnete Anschläge in Eingriff treten. Der Spiegel wird folglich im wesentlichen durch die Zugkraft der Spiralfeder in seinen vorbestimmten Positionen, beispielsweise in angeklappter Parkposition oder in der ausgeklappten Fahrstellung gehalten.

Wird auf das Spiegelgehäuse in Fahrtrichtung des Fahrzeugs eine große äußere Kraft ausgeübt, beispielsweise durch einen Schlag, so wird die Zugkraft der Feder überwunden und der Spiegel um die Anlenkung der Haltestange am Spiegelfuß in Fahrtrichtung in eine Sicherheitsposition geklappt. Dabei verändert sich die Position des Zahnrads in bezug auf das Zahnsegment jedoch nicht. Nachteilig an dieser Verstellvorrichtung ist folglich, daß keine motorische Rückstellung des Spiegelgehäuses aus dieser überstreckten Stellung in die Fahrstellung möglich ist. Der Spiegelkopf muß folglich aus der Sicherheitsposition manuell in die Fahr- bzw. Parkstellung zurückgebracht werden.

Aufgabe der vorliegenden Erfindung ist es, eine Vorrichtung zum Verstellen der Position eines Außenspiegels für Fahrzeuge aller Art zur Verfügung zu stellen, die es ermöglicht, den Spiegel auch aus der überstreckten Stellung mit Hilfe eines Antriebs zurück in eine vorbestimmte Stellung zu bringen.

Diese Aufgabe wird durch die Vorrichtung nach dem Oberbegriff des Anspruchs 1 in Verbindung mit seinen kennzeichnenden Merkmalen gelöst.

Dadurch, daß bei der erfindungsgemäßen Vorrichtung neben dem um eine erste Drehachse drehbar an dem Spiegelfuß angelenkten Zahnsegment eine Gelenkstange vorgesehen ist, die den Spiegelrahmen verbindet und an einer von der ersten Drehachse verschiedenen zweiten Drehachse am Spiegelfuß angelenkt ist, ist es mit der erfindungsgemäßen Vorrichtung möglich, den Spiegel mit dem Antrieb aus der in Fahrtrichtung überstreckten Position in eine vorbestimmte Position zu bringen, beispielsweise in die bei Benutzung des Fahrzeuges übliche ausgeklappte Fahrstellung.

Da bei der erfindungsgemäßen Vorrichtung keine Zugfeder mehr nötig ist, genügt ein geringer Kraftaufwand, um den Spiegelrahmen zu bewegen. Es ist folglich ein schwacher Antrieb, beispielsweise ein schwacher Elektromotor, für die Bewegung des Spiegelrahmens völlig ausreichend, so daß auch Antriebe mit kleiner Bauweise, die auch in kleindimensionierte Spiegel einbaubar sind, verwendet werden können.

Für Außenspiegel mit manueller, mechanischer oder elektrischer Verstellung kann dieselbe Spiegelkonstruktion, d. h. derselbe Spiegelfuß und derselbe Spiegelrahmen verwendet werden. Dadurch werden der Fertigungsaufwand und die Stückkosten verringert.

Mit Hilfe der Zahnstange kann der Antrieb an nahezu jeder beliebigen Stelle des Rahmens befestigt werden, so daß eine optimale Plazierung des Antriebs bezüglich der eingesetzten Kräfte und der Kraftwirkung, vorteilhafterweise etwa mittig an dem Spiegelrahmen, möglich ist.

Weitere vorteilhafte Weiterbildungen der erfindungsgemäßen Vorrichtung sind in den abhängigen Ansprüchen gegeben.

Wird der Spiegelrahmen an der zweiten Drehachse verrastet, so sind Bewegungen des Spiegelkopfes zwischen der ersten vorbestimmten Stellung und einer zweiten vorbestimmten Stellung möglich, ohne die Rastung zu lösen. Die zweite vorbestimmte Stellung ist beispielsweise die Parkstellung, bei der der Spiegel so an das Fahrzeug geklappt ist, daß das Spiegelflächenelement an dem Fahrzeug weitestmöglich anliegt. In diesem Fall ist es möglich, daß der Antrieb den Spiegelkopf zwischen diesen beiden vorbestimmten Stellungen mit nur geringem Kraftaufwand hin und her bewegt, wobei eine Bewegung des Spiegels in die Sicherheitsposition aufgrund starker äußerer Kräfte unter Überwindung der Rastung dennoch möglich ist. Insbesondere ist es dem Antrieb möglich, den Spiegel aus dieser Sicherheitsposition auch wieder in eine Stellung zwischen diesen beiden vorbestimmten Stellungen zu bewegen, und dabei die Rastung wiederherzustellen.

Wird der Antrieb mit einer Überlastabschaltung versehen, so schaltet sich der Antrieb selbst ab, wenn der Spiegel bei einer Bewegung aus der Fahrposition die mit der Spiegelfläche an das Fahrzeug anliegende Parkposition oder die in die andere Richtung aus der Fahrstellung überstreckte Sicherheitsstellung des Spiegels erreicht.

Die Verwendung einer Rutschkupplung erfüllt die gesetzliche Forderung bezüglich des Schutzes auf den Spiegel aufprallender Gegenstände und ermöglicht die exakte Einstellung der manuellen Verstellkraft des Spiegelrahmens.

In Verbindung mit der Dimensionierung des Elektromotors und der Rutschkupplung kann erreicht werden, daß der Antrieb den Spiegelrahmen aus eigener Kraft lediglich zwischen den beiden vorbestimmten Stellungen bewegen kann, wobei er beispielsweise mit Hilfe einer Überlastabschaltung sich bei Erreichen der beiden Stellungen aufgrund des Widerstandes, den die Rastung in der Fahrstellung bzw. der Spiegelfuß in der Parkstellung der Bewegung in diesen beiden Stellungen entgegenstellt, jeweils selbst abschaltet.

Eine besonders vorteilhafte Ausführungsform einer derartigen Rastvorrichtung weist eine an dem Spiegelrahmen befestigte Hakenfeder auf, die die zweite Drehachse umgreift. Ist die Rastvorrichtung in Eingriff, so ist die Spiegelposition zwischen den beiden vorbestimmten Stellungen der Stellung des Zahnrades auf dem Zahnsegment eindeutig zugeordnet.

Eine zusätzliche vorgespannte Zugfeder, die den Spiegelkopf an den Spiegelrahmen drückt, verringert mögliche Schwingungen des Spiegelkopfes insbesondere für Spiegelköpfe, die manuell angetrieben werden.

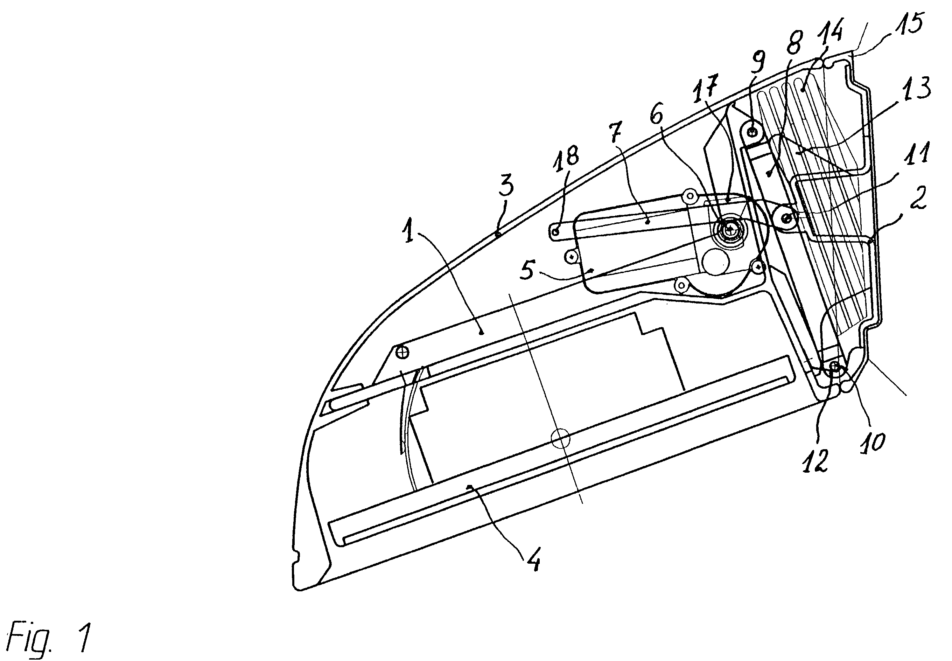

Im folgenden wird eine beispielhafte Ausführungsform der erfindungsgemäßen Vorrichtung beschrieben. Die
- Fign. 1 bis 3: zeigen eine erfindungsgemäße Vorrichtung in unterschiedlichen Stellungen des Spiegelrahmens.

Fig. 1 zeigt einen erfindungsgemäßen Außenspiegel in der Fahrstellung. Der Außenspiegel besteht aus einem Spiegelfuß 2 und einem Spiegelkopf, wobei der Spiegelkopf unter anderem einen Spiegelrahmen 1 und eine an dem Spiegelrahmen 1 befestigte Abdeckung 3 sowie ein Spiegelflächenelement 4 enthält. Der Spiegelrahmen 1 ist mit einem Elektromotor 5 fest verbunden, der über eine Antriebswelle ein Zahnrad 6 antreibt. Das Zahnrad 6 steht in Eingriff mit einer Zahnstange 7, die wiederum an dem Spiegelfuß 2 drehbar angelenkt ist. Die Zahnstange 7 wird von einem Führungselement 17 umfaßt und besitzt einen Endanschlag 18.

Weiterhin ist der Spiegelrahmen 1 über ein Zwischengelenk 8 mit dem Spiegelfuß 2 verbunden, wobei das Zwischengelenk 8 um eine Drehachse 9 an dem Spiegelrahmen sowie um eine zweite Drehachse 10 an dem Spiegelfuß 2 angelenkt ist.

Weiterhin ist an dem Spiegelrahmen 1 eine Hakenfeder 12 befestigt, die die zweite Drehachse 10 umgreifend mit dem Spiegelfuß 2 verrastet ist.

Über Dichtungselemente 14 und 15 ist in der Park- bzw. der Fahrstellung der Innenraum des Spiegelkopfes gegen äußere Einflüsse geschützt.

Der Spiegelfuß weist weiterhin einen Anschlag 13 auf, an dem in der Fahrstellung des Spiegelkopfes das Zwischengelenk anliegt. In dieser Fahrstellung befindet sich das Zahnrad 6 auf der Zahnstange 7 in einer Stellung, die den geringstmöglichen Abstand des Zahnrades zu dem Spiegelfuß 2 aufweist.

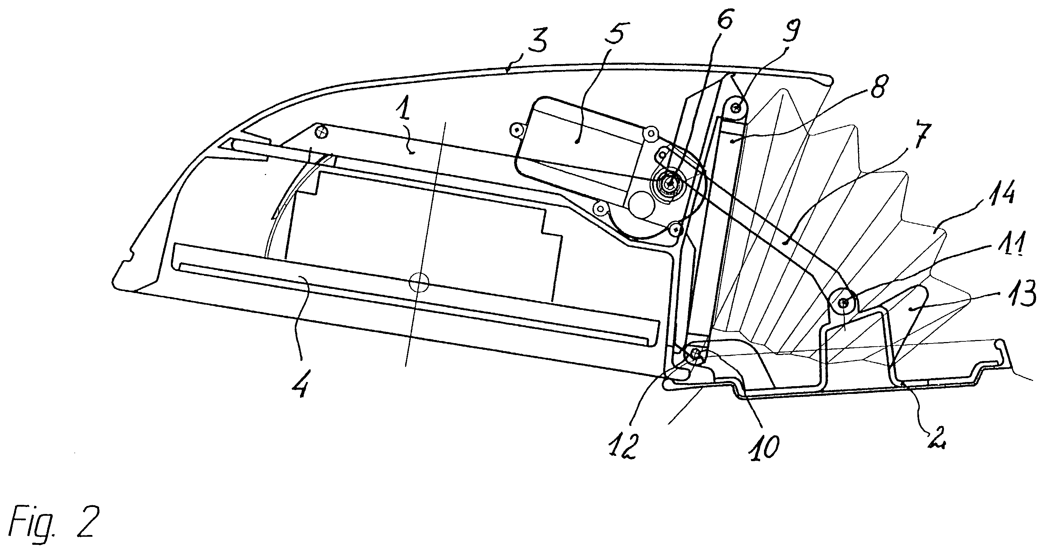

Fig. 2 zeigt denselben Spiegel wie Fig. 1 in der sogenannten Parkstellung, bei der die Spiegelfläche 4 möglichst dicht an das Fahrzeug angelegt ist. In den Fign. 1 bis 4 bezeichnen gleiche Bezugszeichen dieselben Bauelemente.

Kennzeichnend für die sogenannte Parkstellung ist, daß die Hakenfeder 12 mit der zweiten Drehachse 10 verrastet ist, wobei zugleich das Zahnrad 6 sich in einer Stellung befindet, die entlang der Zahnstange 7 den größten Abstand vom Spiegelfuß 2 aufweist.

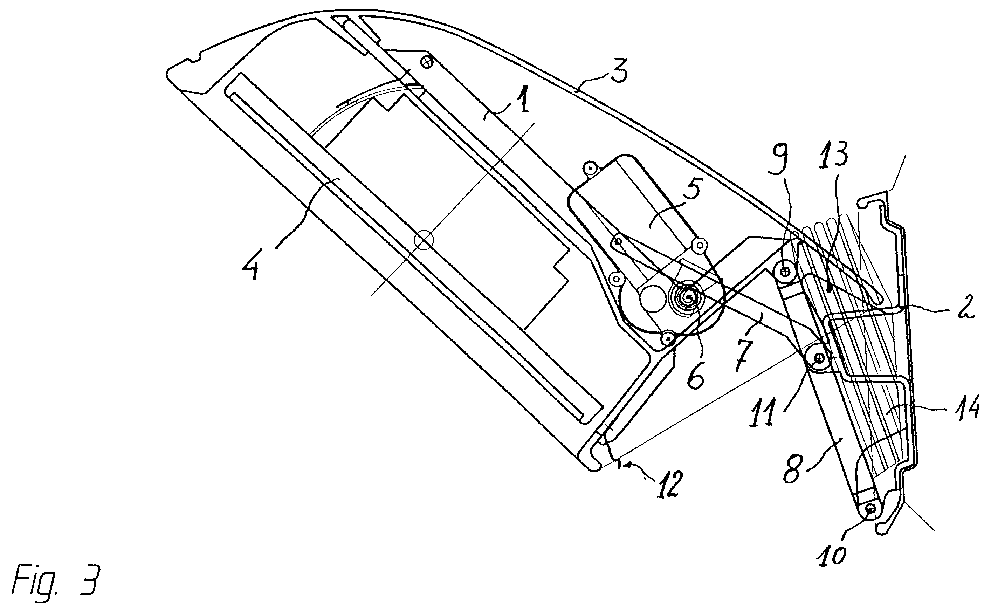

Fig. 3 zeigt den Spiegel aus Fign. 1 und 2 in einer überstreckten Stellung, in die der Spiegel beispielsweise durch eine äußere mechanische Einwirkung in Fahrtrichtung des Fahrzeuges gebracht werden kann. In dieser Stellung befindet sich das Zahnrad 6 ebenso wie bei der Parkstellung in einer möglichst weit von dem Spiegelfuß entlang der Zahnstange 7 entfernten Stellung. Im Unterschied zu der Parkstellung ist jedoch bei dieser überstreckten Stellung die Hakenfeder 12 aus der zweiten Drehachse 10 ausgerastet.

Der Spiegel kann aus der in Fig. 3 gezeigten überstreckten Stellung in die in Fig. 1 gezeigte Fahrstellung zurückbewegt werden, indem das Zahnrad durch den Antrieb 5 angetrieben auf der Zahnstange 7 in Richtung des Spiegelfußes 2 abläuft, bis die Hakenfeder 12 wieder in die zweite Drehachse 10 einrastet. Läuft das Zahnrad anschließend wieder auf der Zahnstange 7 von dem Spiegelfuß 2 weg, so erfolgt eine Drehung des Spiegelkopfes um die zweite Drehachse 10 in die in Fig. 2 gezeigte Parkstellung. In ähnlicher Weise kann durch Ablaufen des von dem Antrieb 5 angetriebenen Zahnrades 6 auf der Zahnstange 7 in Richtung des Spiegelfußes der Spiegel durch den Antrieb wiederum von der Parkstellung in die Fahrstellung gebracht werden.

Der Antrieb 5 ist jedoch so dimensioniert, daß er nicht fähig ist, die Rastung der Hakenfeder 12 um die zweite Drehachse 10 zu lösen, so daß der Spiegelkopf in der Parkstellung verbleibt. Eine Überlastabschaltung schützt in diesem Falle den Antrieb 5 vor einer Überlastung.

An dem Spiegelfuß 2 ist ein Anschlag 13 angebracht, an dem in der Fahrstellung das Zwischengelenk 8 anliegt. Für die überstreckte Stellung bzw. die Parkstellung kann ebenfalls ein Anschlag vorgesehen werden, damit der Spiegelkopf in einer vorbestimmten Position verharrt. Allerdings ist es auch möglich, das Fahrzeug selbst bzw. den Spiegelfuß 2 als Anschlag für die Parkposition bzw. die überstreckte Stellung zu verwenden.

Nicht gezeigt in den Fign. 1 bis 3 ist die erwähnte Überlastabschaltung sowie eine Rutschkupplung, die es bei Einwirken äußerer Kräfte ermöglicht, daß das Zahnrad 6 auf der Zahnstange 7 abläuft, ohne daß der Elektroantrieb 5 bewegt wird. Über diese Rutschkupplung läßt sich insbesondere die Kraft einstellen, die zur manuellen Verstellung des Spiegelkopfes benötigt wird.

## Patentansprüche

1. Vorrichtung zum Verstellen der Position eines Außenspiegels für Fahrzeuge aller Art, der einen fest mit dem Fahrzeug verbundenen Spiegelfuß (2), einen Spiegelkopf mit einem Spiegelrahmen (1) und einem Spiegelflächenelement (4) sowie einen Zahnradmechanismus aus einem Zahnrad (6) und einem mit dem Zahnrad (6) in Eingriff befindlichen, an eine erste Drehachse (11) drehbar an dem Spiegelfuß (2) angelenkten Zahnsegment (7) aufweist,
**dadurch gekennzeichnet,**
daß der Spiegelrahmen (1) über ein Zwischengelenk (8) mit dem Spiegelfuß verbunden ist, wobei das Zwischengelenk (8) an einer von der ersten Drehachse (11) verschiedenen zweiten Drehachse (10) an dem Spiegelfuß (2) angelenkt ist.

2. Vorrichtung nach Anspruch 1, dadurch gekennzeichnet, daß eine Rastvorrichtung (12) vorgesehen ist, die den Spiegelrahmen (1) an der zweiten Drehachse (10) verrastet.

3. Vorrichtung nach Anspruch 2, dadurch gekennzeichnet, daß die Rastvorrichtung eine Hakenfeder (12) aufweist, die die zweite Drehachse des Zwischengelenks als Rastnase umgreift.

4. Vorrichtung nach mindestens einem der vorhergehenden Ansprüche, dadurch gekennzeichnet, daß der Spiegelrahmen (1) fest mit einem Antrieb (5) verbunden ist, der über eine Antriebswelle das Zahnrad (6) bewegt.

5. Vorrichtung nach mindestens einem der vorhergehenden Ansprüche, dadurch gekennzeichnet, daß das Zahnsegment (7) eine Zahnstange oder ein Zahnbogensegment ist.

6. Vorrichtung nach mindestens einem der Ansprüche 2 bis 5, dadurch gekennzeichnet, daß bei der zweiten vorbestimmten Stellung der Spiegelkopf oder das Zwischengelenk an dem Fahrzeug oder einem am Spiegelfuß angeordneten Anschlag anliegt.

7. Vorrichtung nach mindestens einem der vorhergehenden Ansprüche, dadurch gekennzeichnet, daß der Antrieb (5) mit einer Schaltung zur Überlastabschaltung versehen ist.

8. Vorrichtung nach mindestens einem der vorhergehenden Ansprüche, dadurch gekennzeichnet, daß zwischen dem Antrieb (5) und dem Zahnradmechanismus eine Rutschkupplung angeordnet ist.

## Claims

1. Device for adjusting the position of a side mirror for all types of vehicles, comprising a mirror foot (2) which is firmly joined to the vehicle, a mirror head with a mirror frame (1) and a mirror surface element (4) as well as a toothed wheel mechanism composed of a toothed wheel (6) and a tooth segment (7) which meshes with the toothed wheel (6) and is rotably articulated to a first rotary axle (11) on the mirror foot (2), **characterised in that** the mirror frame (1) is joined to the mirror foot via an intermedoiate joint (8), and the intermediate joint (8) is articulated to a second rotary axle (10) on the mirror foot (2), which differs from the first rotary axle (11).

2. Device according to Claim 1, **characterised in that** a detent mechanism (12) is provided which detents the mirror frame (1) on the second rotary axle (10).

3. Device according to Claim 2, **characterised in that** the detent mechanism comprises a hooked spring (12) which reaches around the second rotary axle of the intermediate joint as a detent nose.

4. Device according to at least one of the above claims, **characterised in that** the mirror frame (1) is firmly joined to a drive (5) which moves the toothed wheel (6) via a driveshaft.

5. Device according to at least one of the above claims, **characterised in that** the toothed segment (7) is a toothed rod or a toothed arc segment.

6. Device according to at least one of Claims 2 to 5, **characterised in that** in the second predetermined position the mirror head or the intermediate joint abuts the vehicle or a stop arranged on the mirror foot.

7. Device according to at least one of the above claims, **characterised in that** the drive (5) is provided with an overload switch-off feature.

8. Device according to at least one of the above claims, **characterised in that** a slip-clutch is arranged between the drive (5) and the toothed wheel mechanism.

## Revendications

1. Dispositif de réglage de la position d'un rétroviseur extérieur pour véhicule automobile de tout type, qui présente un support de rétroviseur (2) relié de façon fixe au véhicule, une tête de rétroviseur comportant un cadre de rétroviseur (1) et un élément de surface-miroir (4), ainsi qu'un mécanisme à roue dentée composé d'une roue dentée (6) et d'un segment denté (7) s'engrenant avec la roue dentée (6) et articulé au niveau du support de rétroviseur (2) de façon à pivoter autour d'un premier axe de rotation (11),
caractérisé en ce que le cadre de rétroviseur (1) est relié au support de rétroviseur par le biais d'une articulation intermédiaire (8), l'articulation intermédiaire (8) étant articulée au niveau du support de rétroviseur (2) au niveau d'un second axe de rotation (10) différent du premier axe de rotation (11).

2. Dispositif selon la revendication 1, caractérisé en ce qu'est prévu un dispositif d'encliquetage (12) qui enclenche le cadre de rétroviseur (1) au niveau du second axe de rotation (10).

3. Dispositif selon la revendication 2, caractérisé en ce que le dispositif d'encliquetage présente un ressort à crochet (12) qui entoure le second axe de rotation de l'articulation intermédiaire en tant qu'ergot d'encliquetage.

4. Dispositif selon au moins l'une des revendications précédentes, caractérisé en ce que le cadre de rétroviseur (1) est relié de façon fixe à un entraînement (5) qui déplace la roue dentée (6) par l'intermédiaire d'un arbre menant.

5. Dispositif selon au moins l'une des revendications précédentes, caractérisé en ce que le segment denté (7) est une crémaillère ou un secteur denté.

6. Dispositif selon au moins l'une des revendications 2 à 5, caractérisé en ce que, dans la seconde position prédéfinie, la tête de rétroviseur ou l'articulation intermédiaire reposent contre le véhicule ou contre une butée disposée au niveau du support de rétroviseur.

7. Dispositif selon au moins l'une des revendications précédentes, caractérisé en ce que l'entraînement (5) est équipé d'un circuit de coupure de surcharge.

8. Dispositif selon au moins l'une des revendications précédentes, caractérisé en ce qu'entre l'entraînement (5) et le mécanisme à roue dentée est disposé un accouplement à friction.
